(19) **Europäisches Patentamt** / **European Patent Office** / **Office européen des brevets**

(11) **EP 4 682 288 A1**

(12) **EUROPEAN PATENT APPLICATION**
published in accordance with Art. 153(4) EPC

(43) Date of publication:
**21.01.2026 Bulletin 2026/04**

(21) Application number: **24780722.5**

(22) Date of filing: **28.03.2024**

(51) International Patent Classification (IPC):
*C22C 38/00* (2006.01)  *C22C 38/04* (2006.01)
*C22C 38/60* (2006.01)  *H01F 1/147* (2006.01)
*H01F 27/245* (2006.01)  *C21D 8/12* (2026.01)

(52) Cooperative Patent Classification (CPC):
**C22C 38/00; C22C 38/04; C22C 38/60;**
**H01F 1/147; H01F 27/245;** C21D 8/12; Y02P 10/20

(86) International application number:
**PCT/JP2024/012849**

(87) International publication number:
**WO 2024/204623 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023054829**

(71) Applicant: JFE STEEL CORPORATION
**Tokyo
100-0011 (JP)**

(72) Inventors:
• **IMAMURA, Takeshi**
  **Tokyo 100-0011 (JP)**
• **NAKAI, Yoshie**
  **Tokyo 100-0011 (JP)**
• **HARADA, Akifumi**
  **Tokyo 100-0011 (JP)**
• **YAMAGUCHI, Hiroi**
  **Tokyo 100-0011 (JP)**

(74) Representative: **Hoffmann Eitle
Patent- und Rechtsanwälte PartmbB
Arabellastraße 30
81925 München (DE)**

(54) **GRAIN-ORIENTED ELECTRICAL STEEL SHEET AND WOUND CORE**

(57)     Provided are a grain-oriented electrical steel sheet that is excellent in both magnetic properties and bending accuracy, and a wound iron core formed with the grain-oriented electrical steel sheet. Specifically, the grain-oriented electrical steel sheet has a component composition including C: 0.0050 mass% or less, Si: 2.0 to 8.0 mass%, and Mn: 0.02 to 1.0 mass%, with the balance being Fe and unavoidable impurities, and includes a steel sheet of base metal, and an underlying coating formed on the surface of the steel sheet of the base metal and mainly composed of forsterite. The number density of inclusions with a diameter between 0.5 $\mu$m and 3.0 $\mu$m, both inclusive, in the base metal steel sheet is between 1.0 particles/mm$^2$ and 20.0 particles/mm$^2$, both inclusive.

[Fig. 4]

## Description

Technical Field

The present invention relates to a grain-oriented electrical steel sheet that is suitably used as an iron core material for transformers, and a wound iron core produced with the steel sheet.

Background Art

A grain-oriented electrical steel sheet is a soft magnetic material mainly used as an iron core material for transformers and large generators, and is characterized by having a texture where the <001> axis of crystal orientation, which is the magnetic easy axis of iron, is highly aligned with the rolling direction of the steel sheet. Such a texture can be obtained through secondary recrystallization, whereby crystal grains with {110}<001> orientation, called Goss orientation, preferentially grow into larger grains.

Iron loss properties are considered the most important factor for a grain-oriented electrical steel sheet, because of its intended use. Iron loss refers to the amount of energy lost mainly as heat when the steel sheet is excited, and a lower iron loss value means less loss and better material. As a method for reducing iron loss, a method of reducing variation in the Goss orientation to bring it closer to the ideal Goss orientation, and a method of performing special treatment called magnetic domain subdividing treatment are known, for example. As grain-oriented electrical steel sheets are typically used by being laminated, an insulation coating is formed on the surface of each steel sheet. Iron loss can be reduced by applying tension to the surface of the steel sheet through such an insulating coating.

Iron cores of transformers that use grain-oriented electrical steel sheets are roughly divided into wound iron cores and laminated iron cores. The wound iron core is formed by winding and layering steel sheets and applied to a relatively small transformer. For example, Patent Literature 1 discloses a method for forming a three-phase, three-leg transformer using a wound iron core. Patent Literature 2 discloses a method for producing a wound iron core that can achieve low iron loss. Patent Literature 3 describes a method for prolonging the life of a tool for slitting by applying an organic material to the surface of each grain-oriented electrical steel sheet for a wound iron core. Meanwhile, the laminated iron core is formed by laminating sheets that have been cut into, for example, strips or trapezoids, and is often used for relatively large transformers. Patent Literature 4 and Patent Literature 5 each disclose methods for reducing the iron loss of a three-phase laminated transformer. Patent Literature 6 describes a method for producing a three-phase laminated transformer with reduced iron loss and noise.

Citation List

Patent Literature

Patent Literature 1: JP-A-H05-101943
Patent Literature 2: JP-A-S61-15309
Patent Literature 3: JP-A-S62-14405
Patent Literature 4: JPA-H 06-251966
Patent Literature 5: JPA-H10-261536
Patent Literature 6: JP-A-2000-114064

Summary of Invention

Technical Problem

In recent years, wound iron cores have attracted growing attention, particularly the so-called "unicore", which is a rectangular wound core formed by individually bending steel sheets and laminating them in multiple layers. Conventionally, a wound iron core was assembled by preparing a mandrel around which electrical steel sheets are wound and then physically winding steel sheets around the mandrel. In contrast, the unicore-type wound iron core does not require a mandrel, making it easier to assemble and allowing for design changes. This feature is expected to lead to a cost reduction and an improvement in manufacturability. Further, the conventional wound iron core has a problem in that strain is introduced into a steel sheet while it is wound around a mandrel, which results in significantly degraded iron loss properties. In this respect, the unicore-type wound iron core is advantageous, as strain is introduced into only the bending locations during assembly, resulting in less iron loss degradation, and stress-relief annealing can be omitted in some cases.

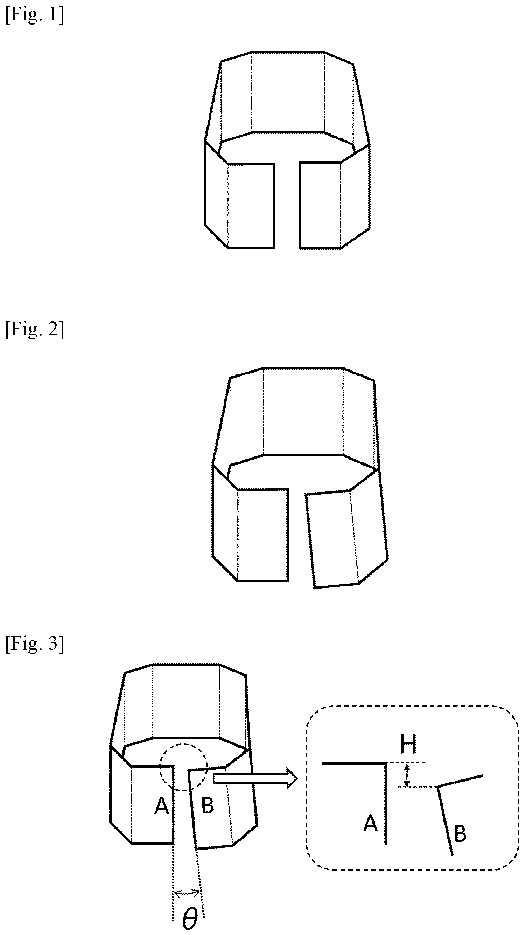

Grain-oriented electrical steel sheets used for the foregoing wound iron core undergoes bending during production, but often exhibit low bending accuracy, which poses a problem. For example, each steel sheet used for a unicore is slit to a prescribed width and is then subjected to bending at several positions, as illustrated in Fig. 1. However, as illustrated in Fig. 2, after the bending, the two butted sides at the end portions of the steel sheet do not often align parallel to each other, causing a problem that steel sheets cannot be laminated to form an iron core.

The present invention has been made in view of the foregoing problem of the conventional methods, and aims to provide a grain-oriented electrical steel sheet with excellent bending accuracy and maintained magnetic properties, as well as a wound iron core produced using the steel sheets.

Solution to Problem

To achieve the object, the inventors have conducted concentrated studies by focusing on the influence of inclusions in a product sheet on the magnetic properties and bending accuracy. As a result, the inventors have discovered that it is important for fine inclusions to be present in a steel sheet and that the number density of the fine inclusions are optimized, to increase the bending accuracy without causing degradation in the magnetic properties. This led to the present invention.

The present invention based on the above findings is a grain-oriented electrical steel sheet including an underlying coating mainly composed of forsterite and formed on a surface of a base metal steel sheet, characterized in that the base metal steel sheet has a component composition including C: 0.0050 mass% or less, Si: 2.0 to 8.0 mass%, and Mn: 0.02 to 1.0 mass%, with a balance being Fe and unavoidable impurities, and a number density of inclusions with a diameter between 0.5 $\mu$m and 3.0 $\mu$m, both inclusive, in the base metal steel sheet is between 1.0 particles/mm$^2$ and 20.0 particles/mm$^2$, both inclusive.

The grain-oriented electrical steel sheet according to the present invention is characterized by containing S: 0.0005 to 0.0100 mass% and Se: 0.0005 to 0.0100 mass% in a state where the steel sheet has the underlying coating. Furthermore, the grain-oriented electrical steel sheet according to the present invention exhibits such concentration distributions of Se and S that, when measured in the thickness direction from the steel sheet surface by glow discharge optical emission spectrometry, peaks in the light emission intensity profiles of Se and S appear at the interface between the underlying coating and the base metal steel sheet, and respective peak intensities, $I_{Se}$ and $I_S$, satisfy Expression (1) below:

$$I_{Se}/I_S \leq 1.0 \ ...(1).$$

In the grain-oriented electrical steel sheet according to the present invention, a number density of inclusions with a diameter exceeding 5.0 $\mu$m within the base metal steel sheet is 2.0 particles/mm$^2$ or less.

In the grain-oriented electrical steel sheet according to the present invention, the base metal steel sheet further contains, in addition to the component composition described above, at least one component selected from the group consisting of Sn: 0.005 to 0.500 mass%, Cr: 0.005 to 0.500 mass%, Cu: 0.01 to 0.50 mass%, Ag: 0.001 to 0.050 mass%, Au: 0.001 to 0.050 mass%, Ni: 0.01 to 0.50 mass%, Bi: 0.005 to 0.500 mass%, P: 0.005 to 0.50 mass%, Sb: 0.005 to 0.50 mass%, Mo: 0.005 to 0.50 mass%, B: 0.00001 to 0.00250 mass%, Nb: 0.001 to 0.020 mass%, Ti: 0.0005 to 0.0400 mass%, V: 0.001 to 0.020 mass%, As: 0.0010 to 0.0200 mass%, Zn: 0.001 to 0.020 mass%, Pb: 0.0001 to 0.0100 mass%, W: 0.0010 to 0.0100 mass%, Co: 0.002 to 0.050 mass%, Ga: 0.0001 to 0.0050 mass%, Ge: 0.0001 to 0.0050 mass%, Ca: 0.001 to 0.020 mass%, Nd: 0.001 to 0.020 mass%, La: 0.001 to 0.020 mass%, Ce: 0.001 to 0.020 mass%, Pr: 0.001 to 0.020 mass%, Dy: 0.001 to 0.020 mass%, and Hf: 0.001 to 0.020 mass%.

The present invention is a wound iron core produced from any of the above-described grain-oriented electrical steel sheets.

Advantageous Effects of Invention

According to the present invention, a grain-oriented electrical steel sheet can be provided that excels in both magnetic properties and bending accuracy, enabling the production of a high-efficiency wound iron core.

Brief Description of Drawings

[Fig. 1] is a schematic view illustrating bending of a steel sheet during the production of a unicore.
[Fig. 2] is a schematic view illustrating a failure in the bending of a steel sheet during the production of a unicore.
[Fig. 3] is a view illustrating parameters θ and H for evaluating working accuracy.

[Fig. 4] is a graph illustrating the influence of the number density of inclusions with a diameter of 0.5 to 3.0 $\mu$m on the working accuracy of bending and iron loss.

Description of Embodiments

First, experiments conducted to develop the present invention will be described.

<Experiment 1>

Molten pig iron tapped from a blast furnace was subjected to primary refining including decarburization, dephosphorization, and desulfurization in a converter during a steelmaking process and then subjected to secondary refining in a vacuum degassing apparatus to produce steel with a component composition including C: 0.031 to 0.051 mass%, Si: 3.20 to 3.35 mass%, Mn: 0.07 to 0.11 mass%, Al: 0.005 to 0.011 mass%, N: 0.0011 to 0.0044 mass%, and S: 0.0008 to 0.0023 mass%, with the balance being Fe and unavoidable impurities. During the secondary refining, the nitrogen partial pressure and the processing time were controlled to adjust the amount and size of inclusions contained in the molten steel. When the molten steel was continuously cast into a slab, the casting rate was varied in the range of 0.4 to 1.5 m/min to alter the states of the inclusions in the steel. The resulting slab was reheated to a temperature of 1230°C and hot-rolled to produce a hot-rolled sheet with a thickness of 2.4 mm. The scale on the surface of the hot-rolled sheet was removed by pickling, and the hot-rolled sheet was then cold-rolled to form a cold-rolled sheet with a final thickness of 0.23 mm. The cold-rolled sheet was subjected to decarburization annealing, which also served as primary recrystallization annealing, at 850°C for 200 seconds in an atmosphere containing 60 vol% of $H_2$ and 40 vol% of $N_2$ and having a dew point of 45°C to thereby form a decarburization-annealed sheet. An annealing separating agent mainly composed of MgO was applied to the surface of the decarburization-annealed sheet and then dried. The steel sheet was then subjected to finishing annealing involving purification by holding the sheet at a temperature of 1200°C in an $H_2$ atmosphere for 5 hours after secondary recrystallization was completed, to produce a grain-oriented electrical steel sheet (product sheet) having an underlying coating mainly composed of forsterite.

To conduct a component analysis of the base metal steel sheet, the underlying coating mainly composed of forsterite was removed from the surface of the thus-obtained product sheet. The analysis revealed that it has a component composition including C: 0.0008 to 0.0021 mass%, Si: 3.20 to 3.35 mass%, and Mn: 0.07 to 0.11 mass%, with the balance being Fe and unavoidable impurities.

Furthermore, a specimen measuring 100 mm in width and 300 mm in length and having the longitudinal direction aligned with the rolling direction was taken from the product sheet, and the iron loss $W_{17/50}$ was measured by the Single Sheet Test Method described in JIS C 2556. According to the present invention, a product sheet with a thickness of 0.23 mm is considered to have excellent iron loss properties if its iron loss $W_{17/50}$ is 0.85 W/kg or less.

Similarly, a sample measuring 150 mm in width and 1000 mm in length and having the longitudinal direction aligned with the rolling direction was cut out from the product sheet. As illustrated in Fig. 1, the sample was subjected to bending at 45° with a curvature radius r of 3 mm at eight locations along the longitudinal direction. The working accuracy of the resulting ring-shaped sample obtained by the bending was then evaluated based on two parameters, $\theta$ and H, as shown in Fig. 3. Herein, $\theta$ represents the angle between the two butted sides (A and B in Fig. 3), and H denotes the vertical misalignment distance between the butted two sides A and B. In the ideal shape, $\theta$ is 0° and H is 0 mm; deviations from these values indicate lower working accuracy. In the experiment, a sample with the parameter $\theta$ in the range of 0 to 3.0° and the parameter H in the range of 0 to 5.0 mm was considered to have acceptable working accuracy. Specifically, a sample with both the parameters within the acceptable range is expressed as "Good," a sample with one of the parameters in the acceptable range is expressed as "Fair," and a sample with neither of the parameters in the acceptable range is expressed as "Poor."

To examine the inclusions within the steel sheet, one surface of the sample, taken from the steel sheet, was subjected to hydrochloric acid pickling to remove material up to the center of its thickness. This treatment exposed a plane that is parallel to the rolled surface (the surface of the steel sheet) and passes through the center of its thickness. Then, the size and the number of inclusions on the surface were measured in a region of 50 mm$^2$, using a scanning electron microscope with an automatic particle measurement mechanism (Personal SEM: Aspex Corporation).

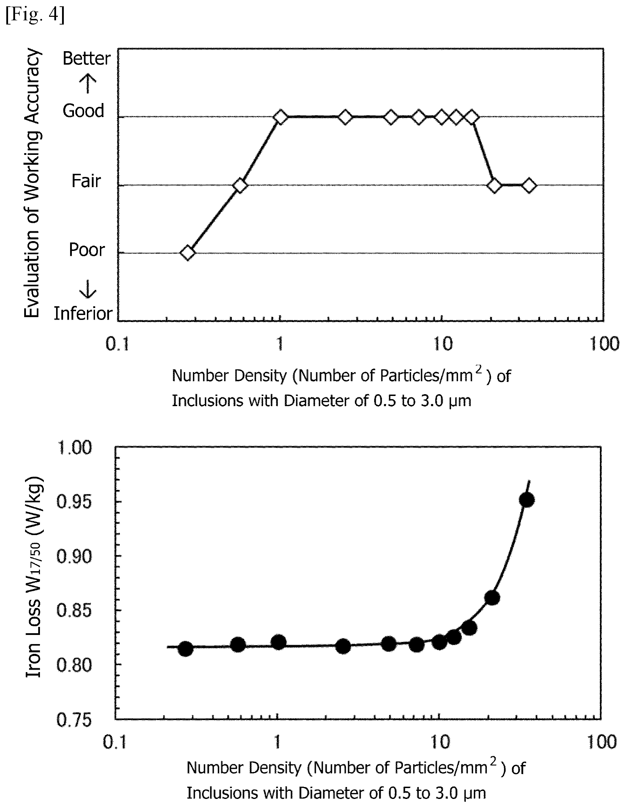

Fig. 4 illustrates the relationship between the measured number density (the number of particles/mm$^2$) of inclusions with a diameter between 0.5 $\mu$m and 3.0 $\mu$m, both inclusive, and the evaluation results of iron loss $W_{17/50}$ and the relationship between the number density and the evaluation results of working accuracy. The figure shows that both iron loss $W_{17/50}$ and working accuracy are excellent when the number density of inclusions with the above diameter is between 1.0 particles/mm$^2$ and 20.0 particles/mm$^2$, both inclusive. In this context, the diameter of each inclusion refers to the mean value of the Feret's diameters in the rolling direction and the sheet width direction read from an SEM image.

The reason that excellent working accuracy is obtained when the number density of the inclusions is in the foregoing range has not yet been fully clarified, but the inventors consider the reason as follows.

As described above, a grain-oriented electrical steel sheet is characterized by the fact that the base metal steel sheet has a highly aligned crystal orientation in a specific direction and that the crystal grains are coarse. Therefore, when the steel sheet is subjected to bending, there are few places where stress will concentrate, and the starting points of the bending become non-uniform, causing non-uniform deformation. As observed in the present experiment, it is considered that when inclusions of a predetermined size exist at a certain density within the steel sheet, stress concentrates on the inclusions, and deformation begins. Furthermore, if the inclusions are uniformly distributed, the deformation also uniformly begins, which contributes to improved working accuracy. However, if the size of the inclusions is less than 0.5 $\mu$m or if the number density of the inclusions is less than 1.0 particle/mm$^2$, the effect of improving working accuracy cannot be fully realized. Conversely, if the number density exceeds 20.0 particles/mm$^2$, the inclusions will hinder magnetic domain wall displacement, resulting in degraded iron loss. A force of hindering magnetic domain wall displacement depends on the average particle size and abundance of the inclusions; when considering a single inclusion, a larger particle size exerts a greater force. Notably, an inclusion with a particle size exceeding 3.0 $\mu$m exerts a prominent force. Accordingly, the present experiment shows that it is possible to produce a steel sheet with excellent working accuracy without degrading the magnetic properties, when relatively small inclusions with an average particle size of about 0.5 to 3.0 $\mu$m are present at this density. Based on this idea, the inclusions with a particle size exceeding 5.0 $\mu$m, which particularly have a significant force of hindering the magnetic domain wall displacement, are desirably 2.0 particles/mm$^2$ or less.

Furthermore, bending may cause the underlying coating, which is formed on the surface of the steel sheet and is mainly composed of forsterite, to strip off at the bending locations. This can expose the base metal steel sheet, potentially leading to poor insulation. To address this issue, an additional experiment was conducted. It revealed that placing a soft compound, such as sulfide or selenide, at the interface between the underlying coating and the steel sheet effectively, prevents stripping.

The present invention was developed based on these new insights.

Next, the component composition of the grain-oriented electrical steel sheet (product sheet) of the present invention will be described.

C: 0.0050 mass% or less

If the C content in the product sheet exceeds 0.0050 mass%, magnetic aging will occur, resulting in degraded iron loss. Therefore, the C content is limited to 0.0050 mass% or less. Preferably, the C content should be 0.0030 mass% or less.

Si: 2.0 to 8.0 mass%

Si is an element needed to increase the specific resistance of steel, and thus reduce iron loss. However, if the Si content is less than 2.0 mass%, this effect will not be fully obtained, while if the Si content exceeds 8.0 mass%, the workability of the steel will decrease, making it difficult to slit or bend the steel sheet. Therefore, the Si content should be within the range of 2.0 to 8.0 mass%. Preferably, the Si content should be within the range of 3.0 to 6.5 mass%.

Mn: 0.02 to 1.0 mass%

Mn is an element effective in improving hot workability and stabilizing secondary recrystallization. However, if the Mn content is less than 0.02 mass%, this effect will be hardly obtained, and also, reducing the Mn content will incur significant costs. Meanwhile, if the Mn content exceeds 1.0 mass%, the magnetic flux density of the product sheet will decrease. Thus, the Mn content should be within the range of 0.02 to 1.0 mass%. Preferably, the Mn content should be within the range of 0.05 to 0.50 mass%.

The grain-oriented electrical steel sheet (product sheet) of the present invention contains C, Si, and Mn as described above, with the balance being substantially Fe and unavoidable impurities. However, with a view to improving the magnetic properties, the steel sheet may also contain, as appropriate, at least one element selected from the group consisting of Sn: 0.005 to 0.500 mass%, Cr: 0.005 to 0.500 mass%, Cu: 0.01 to 0.50 mass%, Ag: 0.001 to 0.050 mass%, Au: 0.001 to 0.050 mass%, Ni: 0.01 to 0.50 mass%, Bi: 0.005 to 0.500 mass%, P: 0.005 to 0.50 mass%, Sb: 0.005 to 0.50 mass%, Mo: 0.005 to 0.50 mass%, B: 0.00001 to 0.00250 mass%, Nb: 0.001 to 0.020 mass%, Ti: 0.0005 to 0.0400 mass%, V: 0.001 to 0.020 mass%, As: 0.0010 to 0.0200 mass%, Zn: 0.001 to 0.020 mass%, Pb: 0.0001 to 0.0100 mass%, W: 0.0010 to 0.0100 mass%, Co: 0.002 to 0.050 mass%, Ga: 0.0001 to 0.0050 mass%, Ge: 0.0001 to 0.0050 mass%, Ca: 0.001 to 0.020 mass%, Nd: 0.001 to 0.020 mass%, La: 0.001 to 0.020 mass%, Ce: 0.001 to 0.020 mass%, Pr: 0.001 to 0.020 mass%, Dy: 0.001 to 0.020 mass%, and Hf: 0.001 to 0.020 mass%. If the content of each element is less than its respective lower limit, the effect of improving the magnetic properties will not be fully obtained, while if the content of each element exceeds its respective upper limit, the development of secondary recrystallized grains will be suppressed, resulting in degraded magnetic properties.

Next, the grain-oriented electrical steel sheet of the present invention will be described.

According to the present invention, the grain-oriented electrical steel sheet is required to contain inclusions having a particle diameter between 0.5 $\mu$m and 3.0 $\mu$m, both inclusive, at a number density between 1.0 particles/mm$^2$ and 20.0 particles/mm$^2$, both inclusive, in the steel sheet (base metal steel sheet) after removal of the underlying coating mainly composed of forsterite. In this context, the number density is the value measured in a plane parallel with the surface of the steel sheet and including the center of its thickness. If the number density is less than 1.0 particle/mm$^2$, the effect of improving working accuracy will not be fully obtained, while if the number density exceeds 20.0 particles/mm$^2$, iron loss will significantly increase. Preferably, the number density should be within the range of 1.0 particle/mm$^2$ or more but 10.0 particles/mm$^2$ or less.

Further, to suppress degradation in iron loss due to inclusions, the number density of inclusions with a diameter exceeding 5.0 $\mu$m, which significantly hinder magnetic domain wall displacement, should be 2.0 particles/mm$^2$ or less, and preferably, 1.0 particle/mm$^2$ or less.

Next, a method for producing the grain-oriented electrical steel sheet of the present invention will be described.

A steel material (slab) used to produce the grain-oriented electrical steel sheet of the present invention is produced by refining material, such as molten pig iron obtained by a blast furnace process or molten steel obtained by an electric furnace process, through a conventionally known refining process, and by adjusting the components to form steel with the component composition described above, and then subjecting the resulting molten steel to, for example, a continuous casting process or an ingot casting-blooming process.

The steel material preferably contains C in the range of 0.010 to 0.090 mass%. The C content is reduced to 0.0050 mass% or less, with which magnetic aging of the product sheet will not occur, through a decarburization annealing process. If the C content exceeds 0.090 mass%, decarburization may become insufficient, resulting in the C content in the product sheet exceeding 0.0050 mass%. Meanwhile, C has the effects of strengthening the grain boundaries of the steel material and improving the texture through $\alpha$-$\gamma$ transformation of the hot-rolled sheet. To obtain these effects, the C content should be 0.010 mass% or more.

When an inhibitor is used to induce secondary recrystallization during finishing annealing described below, the steel material preferably contains Al, N, S, and Se, which are the inhibitor-forming components, in addition to the foregoing component composition. Specifically, when AlN is used as the inhibitor, the steel material preferably contains Al: 0.010 to 0.040 mass% and N: 0.005 to 0.020 mass%. Meanwhile, when MnS and/or MnSe are/is used as the inhibitor, the steel material preferably contains S: 0.005 to 0.040 mass% and/or Se: 0.005 to 0.040 mass%. These inhibitor-forming components are reduced to the impurity level through purification during the finishing annealing described below. Note that such inhibitors as AlN, MnS and/or MnSe, may be used alone or in combination.

Meanwhile, if an inhibitor that incurs secondary recrystallization is not used, the contents of the inhibitor-forming components, Al, N, S, and Se should be minimized. Specifically, the steel material should contain Al: less than 0.010 mass%, N: less than 0.005 mass%, S: less than 0.005 mass%, and Se: less than 0.005 mass%. Of these inhibitor-forming components, S and Se contribute to increasing the adhesiveness of the forsterite-based underlying coating, as described below. Therefore, these components should be contained as appropriate in the foregoing ranges.

Of the foregoing components, the C content can be reduced through the decarburization annealing process, while the N content can be increased through a finishing annealing process. However, the contents of components other than C and N are difficult to change in the hot rolling process and the subsequent processes, and are preferably adjusted at the stage where molten steel is formed.

According to the present invention, it is also important to control the morphology of inclusions during the steel in the refining step, in addition to adjusting the steel components to fall within the foregoing ranges. In a typical grain-oriented electrical steel sheet, inclusions in steel degrades iron loss and thus should be minimized. However, to increase the working accuracy of bending, the present invention requires inclusions of a moderate size in steel that will not adversely affect the magnetic properties at a moderate density.

Examples of methods for controlling the morphology of inclusions include shortening the primary refining time in a converter, limiting the slag removal, or reducing the flow rate or blowing time of a blowing gas during the secondary refining. However, the method is not limited to a particular method in the present invention.

The steel material (slab) with the steel components and inclusions appropriately controlled is heated to a predetermined temperature with a normal method under normal conditions and then hot-rolled to form a hot-rolled sheet with a predetermined thickness. If the slab contains inhibitor-forming components, it is preferable to set the heating temperature for the slab before the hot rolling to 1350°C or higher from the perspective of completely dissolving the inhibitors as a solid solution. Meanwhile, if the slab contains no inhibitor-forming component, the heating temperature for the slab is preferably set to 1250°C or lower, but above the temperature at which hot rolling is possible, from the perspective of reducing the cost of thermal energy.

Next, the steel sheet (hot-rolled sheet) after the hot rolling may be subjected to hot-band annealing in accordance with the properties required. To obtain excellent magnetic properties, the annealing temperature is preferably set in the range of 800°C to 1150°C, both inclusive. If the temperature of the hot-band annealing is below 800°C, a band texture formed during the hot rolling may remain, making it difficult to obtain a primary recrystallization texture of uniformly-sized grains, which may inhibit the development of secondary recrystallized grains. Meanwhile, if the temperature of the hot-band annealing exceeds 1150°C, the grain size after the hot-band annealing will become too coarse, still making it difficult to obtain a primary recrystallization texture of uniformly-sized grains.

The hot-rolled sheet, having been subjected to hot-band annealing as required, subsequently undergoes either a single cold rolling or two or more cold rollings with intermediate annealing between each rolling, thereby producing a cold-rolled sheet having a final thickness (product sheet thickness). When the intermediate annealing is performed, the annealing temperature is preferably set in the range of 900°C to 1200°C, both inclusive. If the annealing temperature is below 900°C, recrystallized grains will become finer, and further, the Goss nuclei in the primary recrystallization texture may decrease, resulting in degraded magnetic properties. Meanwhile, if the annealing temperature exceeds 1200°C, the grain size will become too coarse as in the hot-band annealing, making it difficult to obtain a primary recrystallization texture of uniformly-sized grains.

In the final cold rolling for obtaining the final thickness, it is preferable to adopt warm rolling where the steel sheet temperature is increased to a range between 100°C and 300°C for cold rolling, or adopt inter-pass aging where aging is performed between rolling passes. This can improve the recrystallization texture and thus enhance the magnetic properties.

Next, the cold-rolled sheet with the final thickness is subjected to decarburization annealing, which also serves as primary recrystallization annealing. From the perspective of sufficiently ensuring the decarburization property, the decarburization annealing is preferably performed at an annealing temperature in the range of 800°C to 900°C, both inclusive, in a wet atmosphere with a dew point of 30 °C or higher. Likewise, from the perspective of promoting the decarburization, the atmosphere preferably contains $H_2$ in the range of 5 vol% to 70 vol%, both inclusive. Further, from the perspective of improving the iron loss properties, the heating rate to the foregoing annealing temperature is preferably set to 100°C/s or more. However, a higher heating rate will result in a higher facility cost. Therefore, the upper limit is preferably about 2000°C/s.

Subsequently, an annealing separating agent is applied onto the surface of the steel sheet that has been subjected to decarburization annealing, followed by drying. The steel sheet is then coiled and subjected to finishing annealing. The annealing separating agent mainly composed of MgO functions to prevent fusion between adjacent steel sheets during the annealing process and also contributes to the formation of an underlying coating layer mainly composed of forsterite on the surface of the steel sheet. In this context, the description "mainly composed of MgO" means that the MgO content in the annealing separating agent is 75 mass% or more. In addition, the description "mainly composed of forsterite" means that the content of forsterite in the underlying coating is 80 mass% or more.

The finishing annealing is preferably performed at 800°C or above to develop secondary recrystallization. It is also preferably performed by maintaining the steel sheet at a temperature of 800°C or above for 20 hours or longer to complete the secondary recrystallization. Further, after the completion of the secondary recrystallization, the steel sheet is preferably heated to a high temperature of about 1200°C in an $H_2$-containing atmosphere, to purify impurities in the steel and also form a forsterite coating. In order to further promote the purification of impurities, the steel sheet is preferably held at a temperature of 1180°C or above in an $H_2$ atmosphere for 3 hours or longer.

The steel sheet that has undergone the finishing annealing is preferably subjected to flattening annealing, which is to correct the shape of the steel sheet and improves the iron loss properties, after unreacted portions of the annealing separating agent have been removed by water washing, brushing, or pickling, for example.

When the resulting product sheets are laminated for use, it is preferable to form an insulation coating on the surface of each steel sheet during flattening annealing or in a process before or after flattening annealing to further improve the iron loss properties. As the insulation coating, a tension-imparting insulation coating, which can impart a tensile force to the steel sheet, is preferably applied to increase the effect of reducing iron loss. Further, if a tensile coating is formed via a binder, or if an inorganic coating is formed on the surface layer of the steel sheet through physical or chemical vapor deposition, a coating with excellent adhesiveness is obtained, and a significant effect of reducing iron loss is also obtained.

An existing method for evaluating the adhesion strength of a coating on a grain-oriented electrical steel sheet involves measuring the bending and stripping diameter. The method includes winding small pieces obtained from a grain-oriented electrical steel sheet around the surfaces of a plurality of round bars with different diameters and then determining the threshold (bending and stripping diameter) of the diameter of a round bar at which the coating begins to exhibit a defect or stripping. A smaller bending and stripping diameter leads to excellent stripping resistance. However, in the case of a unicore-type wound iron core, the steel sheet experiences bending at multiple locations, and the curvature radius of each bending location may be 10 mm or less. At these bending locations with such a small curvature radius, the forsterite-based underlying coating formed on the surface of the steel sheet undergoes significant strain. Thus, even if a good result is obtained in the evaluation test for determining the bending and stripping diameter, the stripping of the coating is likely to occur, which is a problem.

To suppress the occurrence of such stripping of the underlying coating, it is effective to allow soft sulfide and selenide to be present at the interface between the base metal steel sheet and the underlying coating. Methods of allowing sulfide and selenide to be present at the interface include, for example, containing S and Se as components of the steel material, or using an annealing separating agent to which a compound containing S and Se is added, as described in an Example. From the perspective of the degree of freedom of implementation, the latter method is preferable.

Herein, to reliably achieve the effect of preventing stripping of the coating, it is preferable to satisfy the following conditions. Based on component analysis of the entire steel sheet, including the underlying coating, the S content should be in the range of 0.0005 to 0.0100 mass%, and the Se content should be in the range of 0.0005 to 0.0100 mass%. When the concentration distributions of Se and S are measured in the thickness direction from the surface of the steel sheet using glow discharge optical emission spectrometry, respective peaks of the light emission intensity profiles of Se and S appear at the interface between the underlying coating and the base metal steel sheet, and furthermore, the ratio $I_{Se}/I_S$, defined as the peak value $I_{Se}$ of the light emission intensity of Se to the peak value $I_S$ of the light emission intensity of S, is 1.0 or less. More preferably, the S content should be in the range of 0.0020 to 0.0090 mass%, the Se content should be in the range of 0.0030 to 0.0090 mass%, and the ratio $I_{Se}/I_S$ should be 0.8 or less.

The ratio $I_{Se}/I_S$ is preferably 1.0 or less because sulfide is softer and has a greater effect of suppressing stripping than selenide, and a larger content of sulfide is therefore preferable.

The grain-oriented electrical steel sheet according to the present invention may undergo magnetic domain subdividing treatment, which significantly contributes to reducing iron loss. Wound iron cores typically undergo stress-relief annealing; however, unicore-type wound iron cores may not undergo this treatment. Accordingly, the magnetic domain subdividing treatment may be either a heat-resistant type, such as a treatment involving forming grooves on the surface of a steel sheet, or a non-heat-resistant type, such as a treatment involving irradiating the surface of the steel sheet with a laser beam or an electron beam.

The grain-oriented electrical steel sheet according to the present invention produced so as to satisfy the foregoing conditions is excellent in magnetic properties and also in working accuracy when subjected to bending. Therefore, the steel sheet can be preferably used for a wound iron core. In particular, the grain-oriented electrical steel sheet according to the present invention in which appropriate amounts of S and Se are present at the interface between the underlying coating and the base metal steel sheet is also excellent in the stripping resistance of the coating, and thus can be suitably used for a "unicore"-type wound iron core having bending locations with small curvature radius.

Example 1

Molten steel having undergone primary refining in an electric furnace was subjected to secondary refining through a ladle refining (LF) process to form steel with a component composition including C: 0.034 to 0.085 mass%, Si: 3.11 to 3.40 mass%, Mn: 0.07 to 0.12 mass%, Al: 0.004 to 0.007 mass%, N: 0.003 to 0.004 mass%, S: 0 to 0.022 mass%, Se: 0 to 0.007 mass%, Sb: 0.022 to 0.031 mass%, and Sn: 0.045 to 0.055 mass%, with the balance being Fe and unavoidable impurities. At this time, the amount and particle size of inclusions in the steel were adjusted by controlling the amount of an Ar gas blown in from the furnace bottom and the refining time. Subsequently, the molten steel with the adjusted components was subjected to continuous casting to form a slab, during which the casting rate was varied within the range of 0.6 to 1.6 m/min in order to further change the states of the inclusions in the steel. The obtained slab was then reheated to a temperature of 1200°C and hot-rolled to form a hot-rolled sheet with a thickness of 2.4 mm. The scale on the surface of the hot-rolled sheet was removed by pickling, and the resulting sheet was cold-rolled to form a cold-rolled sheet with a final thickness of 0.23 mm. Next, the cold-rolled sheet was subjected to decarburization annealing, which also served as primary recrystallization annealing, at 840°C for 100 seconds in an atmosphere containing 60 vol% of $H_2$ + 40 vol% of $N_2$ and having a dew point of 60°C, to form a decarburization-annealed sheet. An annealing separating agent mainly composed of MgO was applied to the surface of the decarburization-annealed sheet, and dried. Next, the sheet was subjected to finishing annealing, which included purification involving holding the sheet at a temperature of 1200°C in an $H_2$ atmosphere for 5 hours after secondary recrystallization was completed, thereby forming a grain-oriented electrical steel sheet (product sheet) having an underlying coating mainly composed of forsterite.

After removing the underlying coating from the resulting product sheet, the components of the remaining steel sheet (base metal steel sheet) were analyzed. The analysis revealed that all of the steel sheets have a component composition including C: 0.0008 to 0.0015 mass%, Si: 3.11 to 3.40 mass%, Mn: 0.07 to 0.12 mass%, Sb: 0.022 to 0.031 mass%, and Sn: 0.045 to 0.055 mass%, with the balance being Fe and unavoidable impurities.

A specimen measuring 100 mm in width and 300 mm in length and having the longitudinal direction aligned with the rolling direction was taken from the product sheet to thus measure the iron loss $W_{17/50}$ by the Single Sheet Test Method described in JIS C 2556.

In addition, a sample measuring 150 mm in width and 1000 mm in length having the longitudinal direction aligned with the rolling direction was cut out from the product sheet. As illustrated in Fig. 1, the sample was subjected to bending at 45° with a curvature radius r of 3 mm at eight locations along the longitudinal direction. Next, to evaluate the working accuracy of the resulting ring-shaped sample obtained by the bending, the two parameters θ and H shown in Fig. 3 were measured. Then, a product sheet with the parameter θ in the range of 0 to 3.0° and the parameter H in the range of 0 to 5.0 mm was evaluated as having excellent (acceptable) working accuracy.

To evaluate the inclusions in the product sheet, one surface of the specimen, taken from the product sheet, was subjected to hydrochloric acid pickling to expose a plane that is parallel to the steel sheet surface and includes the center of its thickness. Thereafter, the number density (the number of particles/mm$^2$) of inclusions with a diameter between 0.5 μm and 3.0 μm, both inclusive, was measured in a region of 50 mm$^2$ of the plane, using a scanning electron microscope with an automatic particle measurement mechanism.

Table 1 shows the measurement results. The table shows that both the magnetic properties and the working accuracy are excellent when the number density of inclusions with a diameter between 0.5 μm and 3.0 μm satisfies the condition of the present invention.

[Table 1]

| No. | Number Density (number /mm$^2$) of Inclusions | Working Accuracy | | Iron Loss W$_{17/50}$ (W/kg) | Remarks |
|---|---|---|---|---|---|
| | | θ(°) | H(mm) | | |
| 1 | 0.06 | 4.2 | 11.2 | 0.816 | Comparative Example |
| 2 | 0.13 | 3.8 | 10.1 | 0.825 | Comparative Example |
| 3 | 0.62 | 2.9 | 6.5 | 0.811 | Comparative Example |
| 4 | 0.89 | 3.2 | 4.8 | 0.816 | Comparative Example |
| 5 | 1.11 | 2.7 | 0.4 | 0.812 | Invention Example |
| 6 | 2.69 | 1.6 | 2.9 | 0.818 | Invention Example |
| 7 | 5.38 | 0.3 | 1.0 | 0.819 | Invention Example |
| 8 | 9.85 | 0.8 | 0.6 | 0.824 | Invention Example |
| 9 | 13.45 | 1.5 | 1.8 | 0.836 | Invention Example |
| 10 | 18.95 | 1.2 | 3.6 | 0.843 | Invention Example |
| 11 | 25.33 | 2.6 | 7.5 | 0.851 | Comparative Example |
| 12 | 33.46 | 2.6 | 8.8 | 0.875 | Comparative Example |

Example 2

Molten pig iron tapped from a blast furnace was subjected to primary refining, including decarburization, dephosphorization, and desulfurization in a converter. The resultant then underwent secondary refining through a vacuum degassing process, during which the final adjustment of the components was performed, thereby forming steel with various component compositions including C: 0.006 to 0.153 mass%, Si: 1.1 to 8.5 mass%, Mn: 0.01 to 1.5 mass%, Al: 0 to 0.032 mass%, N: 0.0005 to 0.0112 mass%, S: 0 to 0.012 mass%, and Se: 0 to 0.021 mass%, and further including, as the other component(s), at least one component selected from the group consisting of Sn, Cr, Cu, Ag, Au, Ni, Bi, P, Sb, Mo, B, Nb, Ti, V, As, Zn, Pb, W, Co, Ga, Ge, Ca, Nd, La, Ce, Pr, Dy, and Hf as appropriate as shown in Table 2, with the balance being Fe and unavoidable impurities. At this time, the amount and particle size of inclusions contained in the steel were adjusted to fall within the ranges according to the present invention, by changing the slag removal amount in the primary refining and adjusting the processing time in the secondary refining. The molten steel was then cast into a steel material (slab) through a continuous casting process. The slab was reheated to a temperature of 1230°C and hot-rolled to form a hot-rolled sheet with a thickness of 2.7 mm. Scale present on the surface of the hot-rolled sheet was removed by pickling, and the resulting sheet was then cold-rolled to obtain an intermediate thickness of 1.6 mm and then subjected to intermediate annealing at 1000°C for 100 seconds. The resulting sheet was then subjected to a second cold-rolling step to form a cold-rolled sheet with a final thickness of 0.23 mm. The cold-rolled sheet was subjected to decarburization annealing, which also served as primary recrystallization annealing, at 850°C for 200 seconds in an atmosphere containing 60 vol% of H$_2$ + 40 vol% of N$_2$ and having a dew point of 45°C, so that a decarburization-annealed sheet was formed. An annealing separating agent mainly composed of MgO was applied to the surface of the decarburization-annealed sheet, and dried. Thereafter, the sheet was subjected to finishing annealing, which included purification involving holding the sheet at a temperature of 1200°C in an H$_2$ atmosphere for 5 hours following the completion of secondary recrystallization, thereby forming a grain-oriented electrical steel sheet (product sheet) having a forsterite coating.

After removing the underlying coating from the resulting product sheet, the components of the base metal steel sheet were analyzed.

In addition, a specimen measuring 100 mm in width and 300 mm in length and having the longitudinal direction aligned with the rolling direction was taken to measure the magnetic properties by the Single Sheet Test Method described in JIS C 2556.

Furthermore, a sample measuring 150 mm in width and 1000 mm in length having the longitudinal direction aligned with the rolling direction was cut out from the product sheet to evaluate the working accuracy. As shown in Fig. 1, the sample was subjected to bending at 45° with a curvature radius r of 3 mm at eight locations along the longitudinal direction. Regarding the resulting ring-shaped sample obtained by the bending, the two parameters $\theta$ and H shown in Fig. 3 were measured. The working accuracy was evaluated as excellent (acceptable) when the parameter $\theta$ is in the range of 0 to 3.0°, and the parameter H is in the range of 0 to 5.0 mm.

To evaluate the inclusions in the product sheet, one surface of a specimen, taken from the product sheet, was subjected to pickling with a mixed solution of hydrofluoric acid and a hydrogen peroxide solution to expose a plane that is parallel to the steel sheet surface and includes the center of the steel sheet thickness. Thereafter, the number densities (numbers of particles/mm$^2$) of inclusions having diameters between 0.5 $\mu$m and 3.0 $\mu$m, both inclusive, and those exceeding 5.0 $\mu$m, were measured in a region of 50 mm$^2$ of the plane, using a scanning electron microscope equipped with an automatic particle measurement mechanism.

Table 2 also shows the measurement results. The table reveals that a steel sheet that satisfies the conditions according to the present invention is excellent in both the magnetic properties and working accuracy. It should be noted that a steel sheet of No. 4 is an example in which the C content in the slab is too high, and decarburization did not progress sufficiently during decarburization annealing. The steel sheet of No. 9, which is Invention Example, has a large number of inclusions with a diameter exceeding 5.0 $\mu$m, resulting in slightly deteriorated magnetic properties. This indicates, in terms of the magnetic properties, that it is preferable for such huge inclusions to be fewer. Although Table 2 does not show the contents of Al, N, S, and Se, which are the inhibitor-forming components, in the steel sheet of the base metal, the contents of such components were reduced to the unavoidable the impurity levels in each steel sheet.

[Table 2]

| No.. | Chemical Components (mass%) of Base Metal Steel Sheet | | | | Number Density of Inclusions | | Working Accuracy | | Iron Loss $W_{17/50}$ (W/kg) | Remarks |
|------|------|------|------|------|------|------|------|------|------|------|
| | C | Si | Mn | Other Components | 0.5 to 3.0$\mu$m (number/mm$^2$) | Above 5.0$\mu$m (number/mm$^2$) | $\theta(°)$ | H(mm) | | |
| 1 | 0.0011 | 3.62 | 0.12 | - | 8.15 | 1.89 | 0.9 | 3.4 | 0.831 | Invention Example |
| 2 | 0.0024 | 3.61 | 0.11 | - | 5.24 | 1.30 | 1.1 | 2.8 | 0.827 | Invention Example |
| 3 | 0.0019 | 3.20 | 0.14 | - | 5.39 | 0.59 | 1.8 | 3.2 | 0.825 | Invention Example |
| 4 | 0.0150 | 3.34 | 0.15 | - | 1.82 | 0.53 | 0.1 | 0.8 | 1.123 | Comparative Example |
| 5 | 0.0023 | 1.12 | 0.09 | - | 6.11 | 1.19 | 2.1 | 2.6 | 1.362 | Comparative Example |
| 6 | 0.0017 | 8.55 | 0.23 | - | 1.67 | 1.53 | 0.1 | 1.5 | 5.241 | Comparative Example |
| 7 | 0.0018 | 3.46 | 0.01 | - | 3.19 | 0.95 | 0.2 | 3.7 | 6.714 | Comparative Example |
| 8 | 0.0016 | 3.09 | 1.52 | - | 3.54 | 1.11 | 0.2 | 1.5 | 5.770 | Comparative Example |
| 9 | 0.0015 | 4.02 | 0.25 | - | 1.86 | 4.69 | 1.6 | 1.9 | 0.835 | Invention Example |
| 10 | 0.0025 | 3.33 | 0.09 | Sb:0.052 | 4.23 | 0.88 | 0.7 | 2.5 | 0.812 | Invention Example |
| 11 | 0.0018 | 3.05 | 0.12 | Mo:0.044 | 3.86 | 1.25 | 1.6 | 2.2 | 0.820 | Invention Example |
| 12 | 0.0020 | 3.51 | 0.15 | Cu:0.084 | 7.02 | 0.59 | 0.8 | 0.9 | 0.809 | Invention Example |
| 13 | 0.0012 | 3.21 | 0.17 | Sn:0.046, Sb:0.053, Mo:0.020, Cu:0.08 | 3.30 | 0.71 | 1.3 | 0.6 | 0.797 | Invention Example |
| 14 | 0.0008 | 2.99 | 0.17 | Au:0.002, Ni:0.46, Ti:0.0230, As:0.0020 | 5.64 | 0.97 | 2.4 | 2.8 | 0.807 | Invention Example |

(continued)

| No.. | Chemical Components (mass%) of Base Metal Steel Sheet | | | | Number Density of Inclusions | | Working Accuracy | | Iron Loss $W_{17/50}$ (W/kg) | Remarks |
|---|---|---|---|---|---|---|---|---|---|---|
| | C | Si | Mn | Other Components | 0.5 to 3.0μm (number/mm²) | Above 5.0μm (number/mm²) | θ(°) | H(mm) | | |
| 15 | 0.0013 | 3.14 | 0.24 | P:0.31,B:0.00007,Co:0.038,Cr:0.009, Nb:0.018 | 1.83 | 1.02 | 1.3 | 0.6 | 0.808 | Invention Example |
| 16 | 0.0013 | 3.50 | 0.11 | Ca:0.016, Dy:0.015, Pb:0.0003, Sb:0.012 | 5.13 | 1.81 | 1.5 | 0.8 | 0.809 | Invention Example |
| 17 | 0.0011 | 3.31 | 0.10 | Cu:0.46, Hf:0.001, Ce:0.013, Ni:0.03, P:0.008 | 8.31 | 1.29 | 1.1 | 0.6 | 0.816 | Invention Example |
| 18 | 0.0007 | 3.22 | 0.17 | Bi:0.210, Mo:0.440, Ga:0.0050, Zn:0.004 | 2.94 | 1.29 | 1.1 | 2.3 | 0.809 | Invention Example |
| 19 | 0.0019 | 3.59 | 0.09 | V:0.004, Nd:0.002, As:0.0120, La:0.002 | 6.55 | 1.78 | 0.2 | 3.8 | 0.823 | Invention Example |
| 20 | 0.0020 | 3.36 | 0.17 | Sn:0.450, W:0.0080, Pr:0.002, Mo:0.008 | 3.83 | 1.80 | 0.4 | 3.6 | 0.805 | Invention Example |
| 21 | 0.0010 | 3.44 | 0.19 | Cr:0.350, Ag0.032, Ge:0.0004, Dy:0.002 | 6.79 | 1.35 | 0.1 | 0.6 | 0.817 | Invention Example |
| 22 | 0.0010 | 3.09 | 0.13 | Sn:0.008, Ti:0.0008, La:0.013, Zn:0.018 | 7.29 | 0.54 | 1.5 | 2.1 | 0.819 | Invention Example |
| 23 | 0.0018 | 3.33 | 0.21 | Co:0.005, Pb:0.0060, Bi:0.009, Ce:0.003 | 3.87 | 1.73 | 1.8 | 2.5 | 0.822 | Invention Example |
| 24 | 0.0015 | 3.41 | 0.16 | Cu:0.02, B:0.00213, Ga:0.0005, Hf:0.020 | 1.91 | 1.81 | 1.8 | 4.0 | 0.814 | Invention Example |
| 25 | 0.0020 | 3.61 | 0.25 | Sb:0.330, V:0.013, Nd:0.016, Pr:0.015 | 5.64 | 0.56 | 1.1 | 1.5 | 0.806 | Invention Example |
| 26 | 0.0020 | 3.27 | 0.14 | Nb:0.0016, Ag:0.010, W:0.0020, Ca:0.001 | 4.47 | 1.96 | 1.6 | 3.5 | 0.823 | Invention Example |
| 27 | 0.0021 | 3.37 | 0.24 | Sb:0.035, Au:0.027, Ge:0.0045 | 3.08 | 1.32 | 0.2 | 3.6 | 0.811 | Invention Example |

Example 3

The steel sheet of No. 1 after decarburization annealing, produced in Example 2, was used as a material. An annealing separating agent mainly composed of MgO was applied to the surface of the steel sheet and then dried. It should be noted that the steel material of the steel sheet of No. 1 contains S: 0.0050 mass% and Se: 0.0040 mass%. As the annealing separating agent, the following five types were applied: an annealing separating agent (No. 1-1), prepared by adding neither magnesium sulfate nor sodium selenate to 100 parts by mass of MgO; an annealing separating agent (No. 1-2), prepared by adding 3 parts by mass of magnesium sulfate to 100 parts by mass of MgO; an annealing separating agent (No. 1-3), prepared by adding 4 parts by mass of sodium selenate to 100 parts by mass of MgO; an annealing separating agent (No. 1-4), prepared by adding 3 parts by mass of magnesium sulfate and 5 parts by mass of sodium selenate to 100 parts by mass of MgO; and an annealing separating agent (No. 1-5), prepared by adding 2 parts by mass of magnesium sulfate and 6 parts by mass of sodium selenate to 100 parts by mass of MgO. Next, the steel sheet was subjected to finishing annealing, which involved purification performed by holding the sheet at a temperature of 1200°C in an $H_2$ atmosphere for 5 hours after the completion of secondary refining, thereby forming a grain-oriented electrical steel sheet (product sheet) having a forsterite coating.

A sample was taken from the resulting product sheet. After removing the underlying coating mainly composed of forsterite from the sample, the contents of C, Si, and Mn in the remaining base metal steel sheet, as well as the contents of S and Se in the steel sheet including the underlying coating were analyzed.

For the sample, the concentration distributions of Se and S in the thickness direction from the surface of the steel sheet were measured through glow discharge optical emission spectrometry. As a result, respective peaks of the light emission intensity profiles of Se and S were observed at the interface between the underlying coating and the base metal steel sheet, and the ratio $I_{Se}/I_S$ of the peak value $I_{Se}$ of the light emission intensity of Se to the peak value $I_S$ of the light emission intensity of S was determined.

A specimen measuring 100 mm in width and 300 mm in length and having the longitudinal direction aligned with the rolling direction was obtained from the product sheet to thus measure magnetic properties by the Single Sheet Test Method in JIS C 2556.

Further, to evaluate the working accuracy, a sample measuring 150 mm in width and 1000 mm in length and having the longitudinal direction aligned with the rolling direction was cut out of the foregoing product sheet. Then, as illustrated in Fig. 1, the sample was subjected to bending at 45° with a curvature radius r of 3 mm at eight locations along the longitudinal direction. Regarding the resulting ring-shaped sample obtained by the bending, the two parameters θ and H shown in Fig. 3 were measured. The working accuracy was evaluated as excellent (acceptable) when the parameter θ is in the range of 0 to 3.0°, and the parameter H is in the range of 0 to 5.0 mm.

At this time, the surface of each bending location was visually observed to inspect the presence or absence of stripping of the underlying coating.

Hoop-shaped coils, each with a width of 150 mm and a length of 100 m, were formed from the foregoing product sheet, and 100 sheets of ring-shaped samples obtained by bending the coils with a bend-cutting machine for steel sheets for unicores were laminated to produce a unicore with an outside diameter having a longer side of 300 mm and a shorter side of 200 mm. Then, the iron loss $W_{17/50}$ of the core was measured. In the present invention, the iron loss $W_{17/50}$ of a unicore formed using steel sheets with a thickness of 0.23 mm was evaluated as excellent if it is 1.00 W/kg or less.

Furthermore, to evaluate inclusions in the product sheet, a specimen was taken from the product sheet, and one surface of the specimen was pickled with a mixed solution of hydrofluoric acid and a hydrogen peroxide solution so as to expose a plane that is parallel to the surface of the steel sheet and passes through the center of its thickness. Thereafter, the number density (the number of particles/mm²) of inclusions with a diameter between 0.5 μm and 3.0 μm was measured in a region of 50 mm² of the plane, using a scanning electron microscope equipped with an automatic particle measurement mechanism.

Table 3 shows the measurement results. This table indicates that a steel sheet that satisfies the conditions according to the present invention is excellent in both the magnetic properties and working accuracy and that a steel sheet in which the ratio $I_{Se}/I_S$ of the peak intensity of Se to the peak intensity of S at the interface between the underlying coating and the steel sheet of the base metal is 1.0 or less is also excellent in the stripping resistance of the coating at the bending locations. In addition, when a "coating stripping test" was performed by winding each steel sheet around a round bar with a diameter of 20 mmφ, no stripping was observed.

[Table 3]

| No. | Chemical Composition (mass%) | | | | | Ise/Is | Number Density of Inclusions | | Working Properties | | | Iron Loss Properties | | Remarks |
|---|---|---|---|---|---|---|---|---|---|---|---|---|---|---|
| | Base Metal Steel Sheet | | | Including underlying coating | | | 0.5 to 3.0μm (number/mm$^2$) | Above 5.0μm (number/mm$^2$) | Working Accuracy | | Presence or Absence of Stripping of Coating | Iron Loss $W_{17/50}$ (W/kg) of Steel Sheet | Iron Loss $W_{17/50}$ (W/kg) of Core | |
| | C | Si | Mn | S | Se | | | | θ(°) | H(mm) | | | | |
| 1-1 | 0.0007 | 3.62 | 0.12 | 0.0030 | 0.0020 | 0.58 | 3.43 | 1.64 | 2.6 | 1.6 | Absence | 0.821 | 0.952 | Invention Example |
| 1-2 | 0.0007 | 3.62 | 0.12 | 0.0090 | 0.0020 | 0.16 | 5.01 | 1.19 | 1.8 | 2.4 | Absence | 0.819 | 0.934 | Invention Example |
| 1-3 | 0.0008 | 3.62 | 0.12 | 0.0030 | 0.0080 | 2.33 | 1.70 | 1.82 | 2.6 | 1.7 | Presence | 0.826 | 0.971 | Invention Example |
| 1-4 | 0.0008 | 3.62 | 0.12 | 0.0090 | 0.0100 | 0.95 | 3.55 | 1.88 | 2.1 | 2.0 | Absence | 0.822 | 0.950 | Invention Example |
| 1-5 | 0.0010 | 3.62 | 0.12 | 0.0060 | 0.0110 | 1.10 | 3.69 | 1.69 | 2.0 | 1.9 | Presence | 0.820 | 0.974 | Invention Example |

**Claims**

1. A grain-oriented electrical steel sheet comprising

   an underlying coating mainly composed of forsterite and formed on a surface of a base metal steel sheet, **characterized in that**
   the base metal steel sheet has a component composition including C: 0.0050 mass% or less, Si: 2.0 to 8.0 mass%, and Mn: 0.02 to 1.0 mass%, with a balance being Fe and unavoidable impurities, and
   a number density of inclusions with a diameter between 0.5 $\mu$m and 3.0 $\mu$m, both inclusive, in the base metal steel sheet is between 1.0 particles/mm$^2$ and 20.0 particles/mm$^2$, both inclusive.

2. The grain-oriented electrical steel sheet according to claim 1,
   wherein
   the grain-oriented electrical steel sheet contains S: 0.0005 to 0.0100 mass% and Se: 0.0005 to 0.0100 mass% in a state where the steel sheet has the underlying coating, and exhibits such concentration distributions of Se and S that, when measured in the thickness direction from the steel sheet surface by glow discharge optical emission spectrometry, peaks in the light emission intensity profiles of Se and S appear at the interface between the underlying coating and the base metal steel sheet, and respective peak intensities, $I_{Se}$ and $I_S$, satisfy Expression (1) below:

$$I_{Se}/I_S \leq 1.0 \ ...(1).$$

3. The grain-oriented electrical steel sheet according to claim 1 or 2, wherein
   a number density of inclusions with a diameter exceeding 5.0 $\mu$m in the base metal steel sheet is 2.0 particles/mm$^2$ or less.

4. The grain-oriented electrical steel sheet according to any one of claims 1 to 3, wherein
   the base metal steel sheet further contains, in addition to the above components, at least one component selected from the group consisting of Sn: 0.005 to 0.500 mass%, Cr: 0.005 to 0.500 mass%, Cu: 0.01 to 0.50 mass%, Ag: 0.001 to 0.050 mass%, Au: 0.001 to 0.050 mass%, Ni: 0.01 to 0.50 mass%, Bi: 0.005 to 0.500 mass%, P: 0.005 to 0.50 mass%, Sb: 0.005 to 0.50 mass%, Mo: 0.005 to 0.50 mass%, B: 0.00001 to 0.00250 mass%, Nb: 0.001 to 0.020 mass%, Ti: 0.0005 to 0.0400 mass%, V: 0.001 to 0.020 mass%, As: 0.0010 to 0.0200 mass%, Zn: 0.001 to 0.020 mass%, Pb: 0.0001 to 0.0100 mass%, W: 0.0010 to 0.0100 mass%, Co: 0.002 to 0.050 mass%, Ga: 0.0001 to 0.0050 mass%, Ge: 0.0001 to 0.0050 mass%, Ca: 0.001 to 0.020 mass%, Nd: 0.001 to 0.020 mass%, La: 0.001 to 0.020 mass%, Ce: 0.001 to 0.020 mass%, Pr: 0.001 to 0.020 mass%, Dy: 0.001 to 0.020 mass%, and Hf: 0.001 to 0.020 mass%.

5. A wound iron core comprising the grain-oriented electrical steel sheet according to any one of claims 1 to 4.

[Fig. 1]

[Fig. 2]

[Fig. 3]

[Fig. 4]

## INTERNATIONAL SEARCH REPORT

International application No.

**PCT/JP2024/012849**

| A. | CLASSIFICATION OF SUBJECT MATTER |
|---|---|

*C22C 38/00*(2006.01)i; *C22C 38/04*(2006.01)i; *C22C 38/60*(2006.01)i; *H01F 1/147*(2006.01)i; *H01F 27/245*(2006.01)i; *C21D 8/12*(2006.01)n
FI:  C22C38/00 303U; C22C38/04; C22C38/60; H01F1/147 183; H01F27/245 155; C21D8/12 B

According to International Patent Classification (IPC) or to both national classification and IPC

| B. | FIELDS SEARCHED |
|---|---|

Minimum documentation searched (classification system followed by classification symbols)

C22C38/00-C22C38/60; H01F1/147; H01F27/245; C21D8/12; C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT | |
|---|---|---|
| Category* | Citation of document, with indication, where appropriate, of the relevant passages | Relevant to claim No. |
| A | JP 2006-152387 A (JFE STEEL CORPORATION) 15 June 2006 (2006-06-15)<br>entire text, all drawings | 1-5 |
| A | JP 2012-102344 A (JFE STEEL CORPORATION) 31 May 2012 (2012-05-31)<br>entire text, all drawings | 1-5 |
| A | JP 2020-508391 A (POSCO) 19 March 2020 (2020-03-19)<br>entire text, all drawings | 1-5 |
| P, A | CN 115896602 A (LYSTEEL CO., LTD.) 04 April 2023 (2023-04-04)<br>entire text, all drawings | 1-5 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 June 2024** | **25 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/012849**

| Patent document cited in search report | | | Publication date (day/month/year) | Patent family member(s) | | | Publication date (day/month/year) |
|---|---|---|---|---|---|---|---|
| JP | 2006-152387 | A | 15 June 2006 | US | 2009/0101248 | A1 | |
| | | | | entire text, all drawings | | | |
| | | | | WO | 2006/059740 | A1 | |
| | | | | EP | 1818420 | A1 | |
| | | | | TW | 200627482 | A | |
| | | | | CN | 101048523 | A | |
| | | | | KR | 10-2007-0057256 | A | |
| JP | 2012-102344 | A | 31 May 2012 | (Family: none) | | | |
| JP | 2020-508391 | A | 19 March 2020 | US | 2021/0130937 | A1 | |
| | | | | entire text, all drawings | | | |
| | | | | WO | 2018/117643 | A1 | |
| | | | | EP | 3561103 | A1 | |
| | | | | KR | 10-2018-0073323 | A | |
| | | | | CN | 110100024 | A | |
| CN | 115896602 | A | 04 April 2023 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05101943 A
- JP S6115309 A
- JP S6214405 A
- JP H06251966 A
- JP H10261536 A
- JP 2000114064 A